# EUROPEAN PATENT APPLICATION

(11) **EP 1 517 252 A1**
(43) Date of publication of application: **23.03.2005**
(21) Application number: 04255705.8
(22) Date of filing: 20.09.2004
(51) Int. Cl.: G06F 17/30

(54) **Apparatus and method for rewriting selectively the URLs contained in a web page**

(30) Priority: 19.09.2003 JP 2003327267
(71) Applicant: Ricoh Company, Ltd., Tokyo 143-8555 (JP)
(72) Inventor: Takahashi, Seiji, Shinjuku-ku, Tokyo (JP)
(74) Representative: Mounteney, Simon James

(57) **Abstract**

In an information processing apparatus, a plurality of Web page display information generating parts (300) generates Web page display information to display in a Web page in response to a Web page request, wherein the Web page includes a plurality of information components (402-406, 412), and a Web page generating part (120) generates the Web page by switching an address of at least one of the plurality of the information components (402-406, 412) into an absolute path or an relative path.

## Description

### BACKGROUND OF THE INVENTION

### 1. Field of the Invention

The present invention generally relates to an information processing apparatus that can dynamically switch from a description showing a URL (Uniform Resource Locator) that is referred through information in a Web page to a relative path or an absolute path.

### 2. Description of the Related Art

Recently, an information provider utilizing the Internet to provide information has spread an information service to a mobile terminal such as a mobile telephone and a PDA (Personal Digital Assistant) terminal as well as a client PC (Personal Computer). Thus, methods for providing service become diversified.

Japanese Laid-open Patent Application No. 11-175515 discloses to generate display contents corresponding to a type of a terminal with respect to HTML (HyperText Markup Language) data being prepared beforehand for information service, in order to provide information suitable for a size of a display screen at the terminal such as a client PC, a mobile telephone, a PDA terminal, or a like. Japanese Laid-open Patent Application No. 2002-63108 discloses that a gateway server for mediating a Web server for conducting an information service and a terminal for conducting an information request conducts an additional process for eliminating unnecessary data and adjusting a color attribute of an image in response to a type of the terminal with respect to information being provided from the Web server in response to the information request sent from the terminal.

On the other hand, recently, Japanese Laid-open Patent Application No. 2002-7095 discloses a data processing apparatus including a Web server function capable of providing information concerning an image formation. By using the data processing apparatus, a user can receive an information service concerning a device for conducting an image formation process provided in the data processing apparatus through the Internet.

However, in the above-described conventional technologies, for example, a description showing a URL, which is referred through information in a Web page, cannot be dynamically changed to a relative path or an absolute path.

That is, when the Web page is displayed, in a case in that an SSL (Secure Socket Layer) communication is conducted only for a portion to be secured, generally, the Web page is created in HTML (HyperText Markup Language) so as to send and receive the portion to be secured by the SSL communication. Accordingly, for example, in a case in that a user desires the SSL communication only for the portion or it is considered to provide the Web page corresponding to the user, a Web page developer is required to create various combinations of HTML files beforehand. It results to increase a workload of the Web page developer.

### SUMMARY OF THE INVENTION

It is a general object of the present invention to provide information processing apparatuses and information processing methods in which the above-mentioned problems are eliminated.

A more specific object of the present invention is to provide an information processing apparatus and an information processing method, in which a description of a URL, which is referred through information in a Web page, can be dynamically changed to a relative path or an absolute path.

The above objects of the present invention are achieved by an information processing apparatus, including: a plurality of Web page display information generating parts generating Web page display information to display in a Web page in response to a Web page request, wherein the Web page includes a plurality of information components; and a Web page generating part generating the Web page by switching an address of at least one of the plurality of the information components into an absolute path or an relative path.

According to the present invention, it is possible to dynamically describe an URL (Uniform Resource Locator) to refer information provided within the Web page by the absolute path or the relative path. In particular, in a description of the URL by the absolute path, it is possible to indicate a protocol different from a protocol of the Web page being currently displayed. Therefore, it is possible to guarantee a security of information within the Web page by partially conducting an SSL communication within the Web page.

The information processing apparatus may further include a path switch information obtaining part obtaining path switch information indicating to switch the address to the absolute path or the relative path; and a Web page handler part sending the common path information of the absolute path, which is formed by common path information to be succeeded without any change by a Web page transition and relative path information including identification information specifying each of the information components, to the Web page generating part, wherein the Web page generating part generates the Web page based on the common path information when the path switch information indicates the absolute path so as to show the address of at least one of the information components by the absolute path.

According to the present invention, it is possible to dynamically describe the URL of the information referred from the Web page based on setting information showing a request of switching (converting) a path and set by the user.

In the information processing apparatus, each of the Web page display information generating parts may include an obtaining part obtaining the path switch information from the path switch information obtaining part; and a sending part sending the path switch information to the Web page handler part, and sending the identification information of the information component to be indicated by the absolute path in the plurality of the information components when the path switch information indicates the absolute path, wherein the Web page handler part sends the common path information, and the path switch information and the identification information which are received from each of the Web page display information generating parts, and the Web page generating part generates the Web page so as to show the address of the information component specified by the identification information, by the absolute path.

According to the present invention, each of the plurality of the Web page display information generating parts can obtain the setting information showing a request of switching the path.

In the information processing apparatus, the Web page generating part may generate the Web page so that the address of the information components is shown by the absolute path indicating a second protocol different from a first protocol, which is used to provide the Web page.

According to the present invention, in a case of converting into the absolute path, it is possible to indicate the second protocol different from the first protocol indicated in the URL at the Web page request. Therefore, it is possible to set a different protocol from the Web page to at least one of portions of information forming the Web page, which is to be displayed.

In the information processing apparatus, the Web page display information generating part may indicate the first protocol and the second protocol.

According to the present invention, each of the plurality of the Web page display information generating parts can indicate the protocol.

In the information processing apparatus, the Web page generating part may generate the Web page by utilizing a page creation style sheet for each Web page and a path conversion style sheet for converting the address of the information component into the absolute path, so that the address of the information component is shown by the absolute path.

According to the present invention, it is possible to convert into the absolute path by utilizing the page creation style sheet (login XSL) and the path conversion style sheet (absolute path conversion XSL).

In the information processing apparatus, the path switch information obtaining part may obtain the path switch information, which is indicated by the user at a client terminal used by the user, through a network.

According to the present invention, the setting information can be set from the client PC used by the user.

The information processing apparatus may further include an operation panel which can be operated by the user, wherein the path switch information obtaining part obtains the path switch information which is indicated by the user at the operation panel.

According to the present invention, the user can set the setting information at the operation panel of the information processing apparatus.

In the information processing apparatus, the Web page handler part may describe the common path information, the path switch information and the identification information received from the each of the Web page display information generating parts in extensible markup language to create XML data, and sends the XML data to the Web page generating part.

According to the present invention, the Web page handler can provide information in XML.

In the information processing apparatus, the identification information may be a data file name.

In the information processing apparatus, the identification information may be web identification information identifying each of the plurality of the Web page display information generating parts.

In the information processing apparatus, the information component may be an address of another Web page to link from the Web page.

In the information processing apparatus, the common path information may include at least one of language information, device type information, and profile information.

In the information processing apparatus, the common path information may include a first protocol or a second protocol, and an IP address.

The above objects of the present invention can be achieved by an information processing method executed by a computer.

### BRIEF DESCRIPTION OF THE DRAWINGS

In the following, embodiments of the present invention will be described with reference to the accompanying drawings.
FIG. 1 is a block diagram showing a hardware configuration of an information processing apparatus according to an embodiment of the present invention;
FIG. 2 is a block diagram showing a functional configuration of the image forming apparatus according to the embodiment of the present invention;
FIG. 3 is a diagram showing a URL configuration according to the embodiment of the present invention;
FIG. 4 is a diagram showing a process sequence according to the embodiment of the present invention;
FIG. 5 is a diagram showing the process sequence according to the embodiment of the present invention;
FIG. 6 is a diagram showing an example of Web page display information provided from a Web page function according to the embodiment of the present invention;
FIG. 7 is a diagram showing common path information provided from a network communication service library according to the embodiment of the present invention;
FIG. 8 is a diagram showing an example of Web page display data provided to a SOAP library according to the embodiment of the present invention;
FIG. 9 is a diagram showing an example of a response DOM described in XML and provided from the SOAP library according to the embodiment of the present invention;
FIG. 10 is a diagram showing an example of a response HTML in a case of changing into an absolute path according to the embodiment of the present invention;
FIG. 11 is a diagram showing an example of a response HTML in the case in that the absolute path is not indicated, according to the embodiment of the present invention;
FIG. 12 is a diagram showing an example of a screen displayed at a client PC according to the embodiment of the present invention;
FIG. 13 is a diagram showing an example of a screen for setting an SSL communication according to the embodiment of the present invention;
FIG. 14 is a diagram showing an example of a login XSL according to the embodiment of the present invention;
FIG. 15 is a diagram showing the example of the login XSL according to the embodiment of the present invention;
FIG. 16 is a diagram showing the example of the login XSL according to the embodiment of the present invention;
FIG. 17 is a flowchart for explaining an absolute path converting process conducted by a Web application distribution common library according to the embodiment of the present invention; and
FIG. 18 is a flowchart for explaining the absolute path converting process executed by an XSLT processor according to the present invention.

### DESCRIPTION OF THE PREFERRED EMBODIMENT

In the following, an embodiment of the present invention will be described with reference to the accompanying drawings.

An information processing apparatus according to the embodiment of the present invention is an apparatus including at least one of various different image forming functions such as a printer, a facsimile, a copier, and a like, and capable of providing information concerning an image formation by a plurality of Web applications.

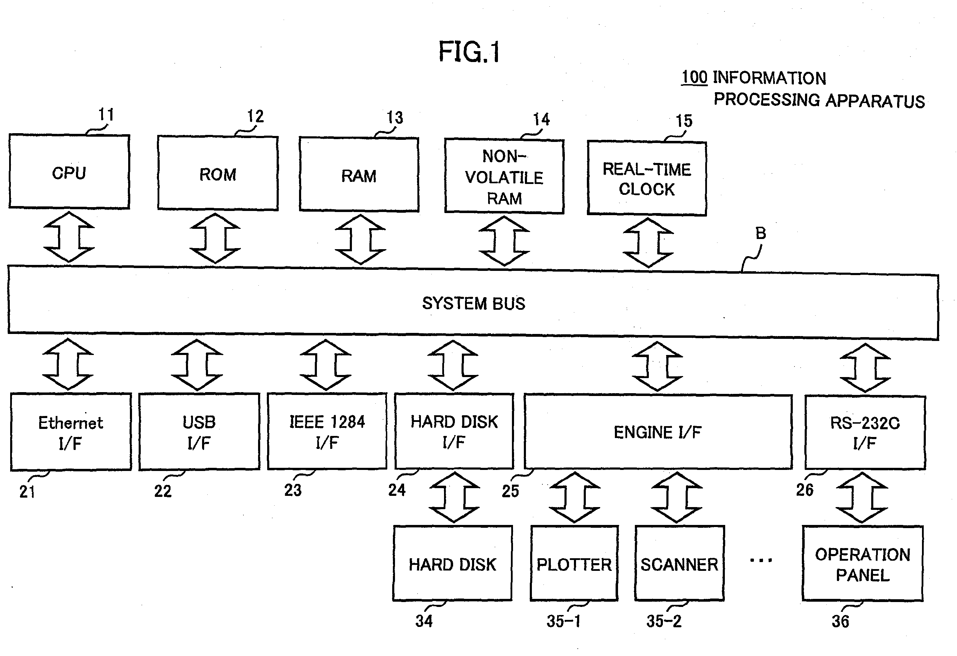

FIG. 1 is a block diagram showing a hardware configuration of the information processing apparatus according to the embodiment of the present invention. In FIG. 1, the information processing apparatus 100 is an apparatus controlled by a computer and includes a CPU (Central Processing Unit) 11, a ROM (Read-Only Memory) 12, a RAM (Random Access Memory) 13, a non-volatile RAM 14, a real-time clock 15, an Ethernet™ I/F (Interface) 21, a USB (Universal Serial Bus) 22, an IEEE (Institute of Electrical and Electronics Engineers) 1284 I/F 23, a hard disk I/F 24, an engine I/F 25, and a RS-232C I/F 26, which are connected to a system bus B.

The CPU 11 controls the information processing apparatus 100 in accordance to programs stored in the ROM 12. In the RAM 13, an area is assigned to each of resources connected to respective interfaces 21 through 26. In the non-volatile RAM 14, information necessary for processes conducted by the CPU 11 is stored to control the information processing apparatus 100. The real-time clock 15 clocks a present time, and is used by the CPU 11 to synchronize processes.

An interface cable for the Ethernet™ such as a 10 BASE-T, 100 BASE-TX, or a like is connected to the Ethernet™ I/F 21. An interface cable for the USB is connected to the USB 22. An interface cable for the IEEE 1284 is connected to the IEEE 1284 I/F 23.

A hard disk 34 is connected to a hard disk I/F 24. Document data of a document, which are sent through a network and printed out, or image data after a printing process are stored in the hard disk 34. A plotter 35-1 for printing to a predetermined medium based on the document data and a scanner 35-2 for scanning image data are connected to the engine I/F 25. An operation panel 36 is connected to the RS-232C I/F 26, so as to display information for a user and obtain input information or setting information by the user.

Next, a functional configuration of the information processing apparatus 100, which includes a hardware shown in FIG. 1, can conduct various different image forming processes, and includes a plurality of Web applications.

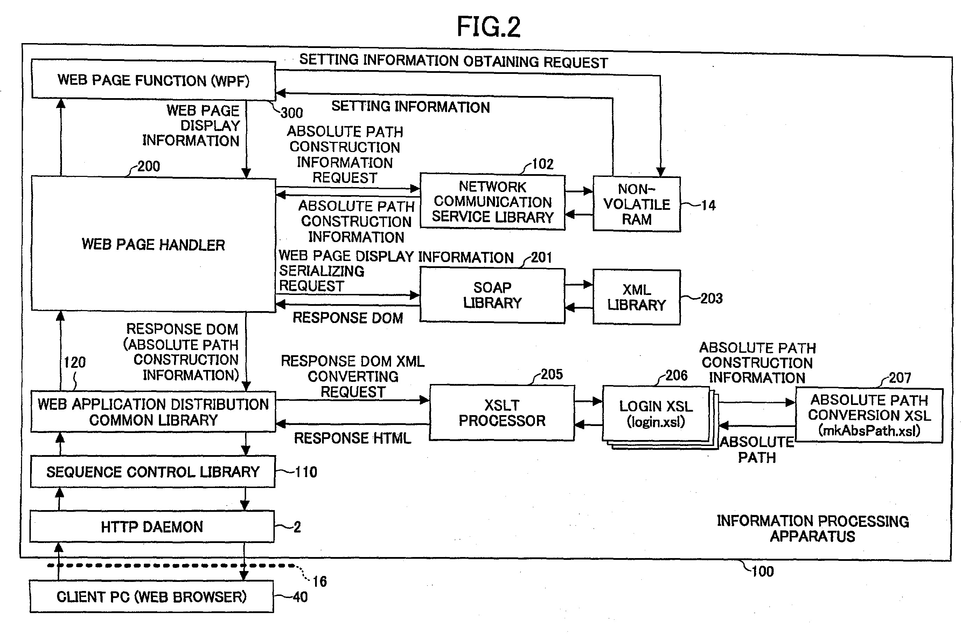

FIG. 2 is a block diagram showing the functional configuration of the image forming apparatus according to the embodiment of the present invention. In FIG. 2, the information processing apparatus 100 is a computer that can connect to a client PC 40 through an Internet 16 and provide information as a response for a Web page request in response to the Web page request for requesting a Web page from the client PC 40. For the sake of convenience, the information processing apparatus 100 is connected to one client PC 40 through the Internet 16. The information processing apparatus 100 can be connected to a plurality of the client PCs 40. The client PC 40 is a computer having a Web browser.

The information processing apparatus 100 mainly includes an HTTP daemon 2 for conducting a communication control in accordance with an HTTP (Hyper Text Transfer Protocol) , a sequence control library 110, a Web application distribution common library 1200, a Web page handler 200, a network communication service library 102, a non-volatile RAM 14, a SOAP (Simple Object Access Protocol) library 201, a XML (extensible Markup Language) library 203, an XSLT (XSL Transformations) processor 205, a Web page function (WPF) 300 including a plurality of Web applications.

The information processing apparatus 100 receives a request from the client PC 40 in accordance with the HTTP and conducts an information service in response to the request as a response corresponding to the request.

The HTTP daemon 2 receives a Web page request from the client PC 40 in accordance with the HTTP, and sends a response HTML in response to the Web page request, to the client PC 40.

The sequence control library 110 conducts a predetermined sequence control process for internally managing a difference between a process sequence for sending and receiving data through the Internet 16 and a process sequence for sending and receiving data to/from each of the Web applications. The sequence control library 110 is a common process part for the plurality of Web applications.

Web application distribution common library 120 analyzes a request sent from the client PC 40 and generates a response to send to the client PC 40, and is a common process part for the plurality of the Web applications of the Web page function 300. The Web application distribution common library 120 converts a response described in XML by the Web page handler 200 into a display format described in HTML corresponding to a device type of each client PC 40 by the XSLT processor 205.

The Web page handler 200 is a process part for converting one process language interpretable for the Web page function 300 into another process language interpretable for a communication control to receive from or send to the client PC 40. The Web page handler 200 calls one Web page application of the Web page function 300 corresponding to the Web page request by a function call through a CGI (Common Gateway Interface). In addition, the Web page handler 200 sends a Web page display information serializing request to the SOAP library 201 to describe Web page display information received from the Web page function 300 in XML.

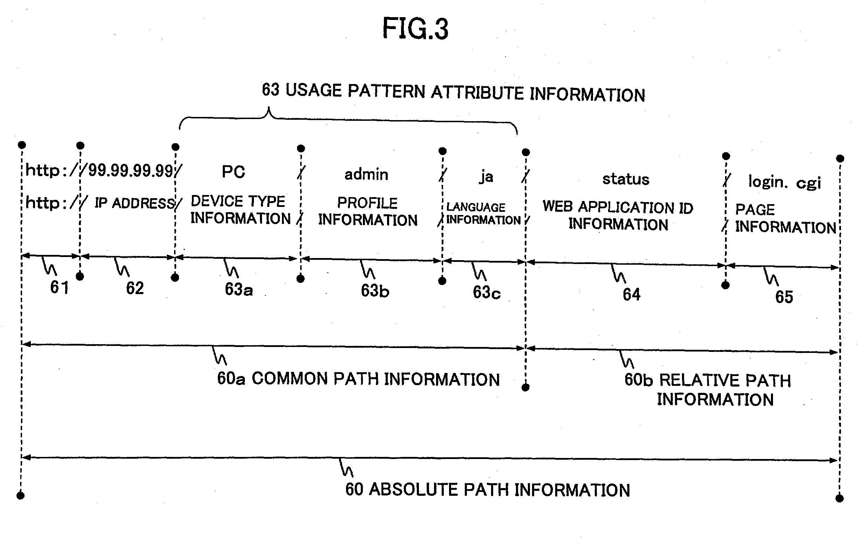

The network communication service library 102 manages HTTP connection information concerning a connection with the client PC 40. A vconfigured by the HTTP daemon 2 at a first connection with the client PC 40 is managed in the HTTP connection information. The network communication service library 102 stores the HTTP connection information to the non-volatile RAM 14, and refers the HTTP connection information if necessary. In response to an absolute path construction information request for requesting information to construct an absolute path from the Web page handler 200, a common path information 60a (will be described later in FIG. 3) of an URL managed in the HTTP connection information is provided to the Web page handler 200 as absolute path construction information.

The SOAP library 201 utilizes the XML library 203 to conduct a data conversion and serialize Web page display information given by a variable of C language by describing the Web page display information in XML, in response to a Web page display information serializing request sent from the Web page handler 200. In this embodiment of the present invention, serializing the Web page display information means describing the Web page display information sent from the Web page function 300 in XML. The Web page display information being serialized is sent to the Web page handler 200 as a response DOM (Document Object Model).

The XML library 203 is utilized by the SOAP library 201 to serialize the Web page display information by describing in XML. In addition, the XML library 203 is utilized by the XSLT processor 205 to generate a HTML description showing the Web page display information.

The XSLT processor 205 obtains an absolute path by referring to absolute path conversion XSL (mkAbsPath) data showing the absolute path configuration information based on login XSL (login.xsl) data 206 corresponding to page information 65 of the URL indicated by the Web page request of the client PC 40, in response to a response DOM XSL converting request sent from the Web application distribution common library 120. Then, The XSLT processor 205 creates a response HTML by utilizing the XML library 203 so that the URL is described by the absolute path. The response HTML is sent to the Web application distribution common library 120.

When each Web application of the Web page function 300 is called by the function call from the Web page handler 200, the Web application returns the Web page display information to the Web page handler 200. Each Web application of the Web page function 300 obtains setting information from the non-volatile RAM 14 storing the setting information showing whether or not a user indicates a conversion into the absolute path, and sends the Web display information including GIF data for configuring the setting information, the URL to refer, and the Web page the relative path information 60b (will be described later in FIG. 3) for a page transition, to the Web page handler 200. The page transition is conducted to display another Web page linked from the Web page being displayed.

A URL configuration according to the embodiment of the present invention will be described with reference to FIG. 3. FIG. 3 is a diagram showing a URL configuration according to the embodiment of the present invention. In FIG. 3, the URL is shown by absolute path information 60 configured by the common path information 60a and the relative path information 60b.

For example, the URL configured as described above includes a protocol type 61 such as "http", an IP address 62 shown by "99.99.99.99", device type information 63a shown by "pc", profile information 63b shown by "admin", language information 63c shown by "ja", a Web application ID 64 shown by "status", and page information 65 shown by "login.cgi".

The protocol type 61, the IP address 62, the device type information 63a, the profile information 63b, and the language information 63c are succeeded to a following page transition as the common path information 60a. The common path information is shared to refer with the plurality of Web applications that are called by the page transition. In the common path information 60a, the device type information 63a, the profile information 63b, and the language information 63c configures usage pattern attribute information 63 showing attributes of a usage pattern of the client PC 40.

In the usage pattern attribute information 63, the Web application ID 64, the device type information 63a showing a current device type of the client PC 40s, the profile information 63b showing the profile of the user using the client PC 40, the language information 63c showing a language used at the Web browser of the client PC 40. For example, "pc" showing the client PC 40 (personal computer) is set as the device type information 63a, "admin" showing an administrator or "user" showing a regular user is set as the profile information 63b, and "ja" showing that a language displayed at the Web browser of the client PC 40 is Japanese is set as the language information 63c. After that, the common path information 60a is succeeded until the client PC 40 disconnects. In addition, the Web page application ID 64 and the page information 65 configures the relative path information 60b.

After the Web page is displayed by the URL as described above, even if only the relative path information 60b is indicated during the page transition, the common path information 60a is always succeeded from a current Web application to a next Web application.

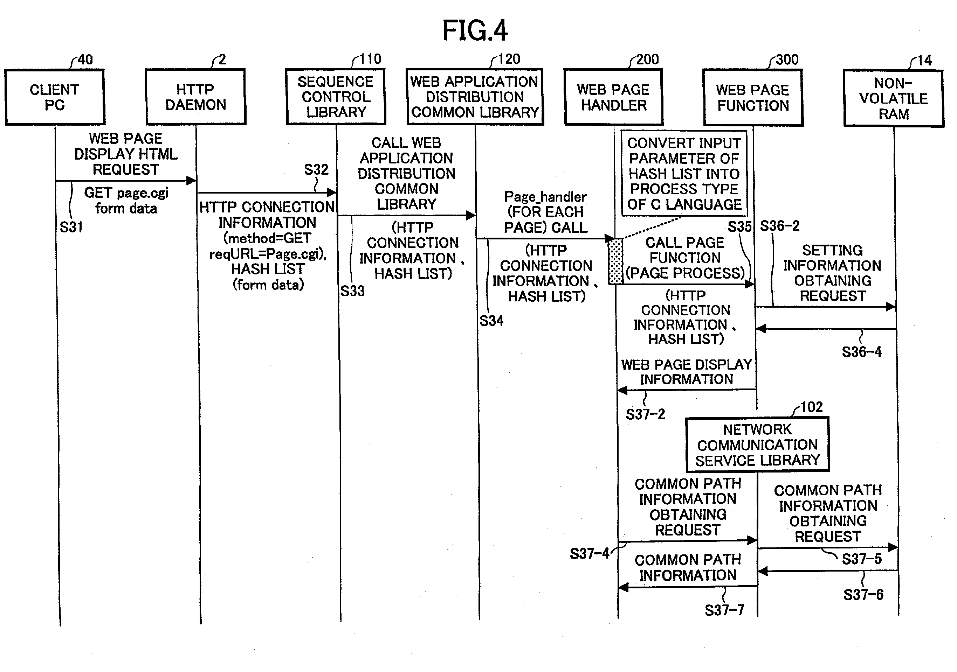

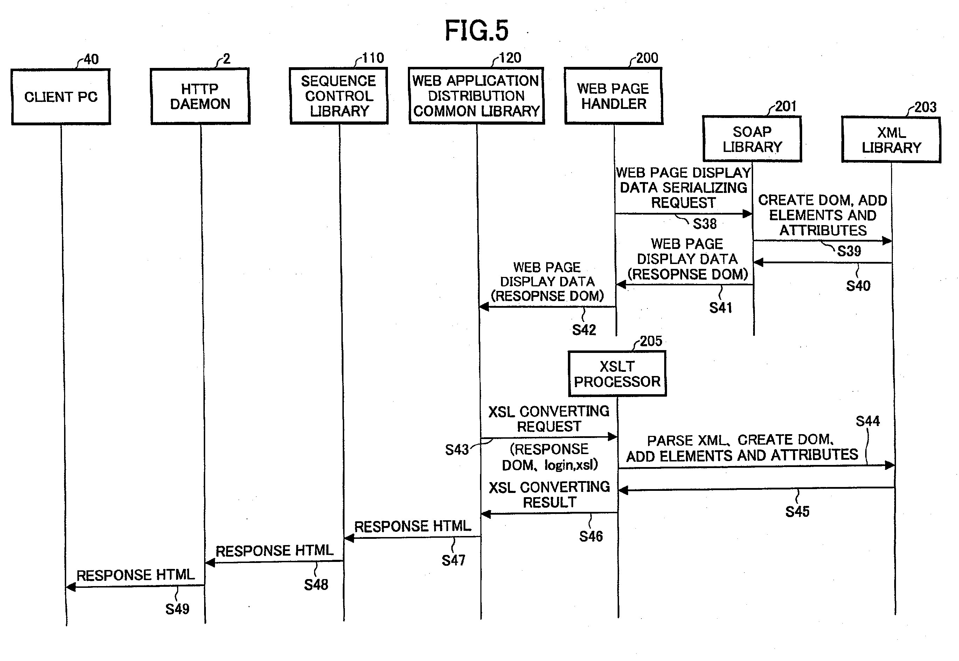

Next, a process sequence until the information service is conducted in response to the Web page request sent from the client PC 40 will be described with reference to FIG. 4 and FIG. 5. FIG. 4 and FIG. 5 are diagrams showing the process sequence according to the embodiment of the present invention. A single successive process sequence is shown by referring to FIG. 4 and FIG. 5.

In FIG. 4, the client PC 40 requests a HTML description to display a Web page by using a GET method of the HTTP (Web page request) (step S31).

The HTTP daemon 2 of the information processing apparatus 100 sends HTTP connection information and a hash list to the sequence control library 110 (step S32). The hash list is a list showing a correspondence of the relative path information 60b indicated by the URL of the Web page request and the Web application of the Web page function 300 actually called by the function call.

The sequence control library 110 calls the Web application distribution common library 120 (step S33). In this case, the sequence control library 110 sets the HTTP connection information showing information concerning a connection with the client PC 40 and the hash list as arguments.

The Web application distribution common library 120 specifies and calls the Web page handler 200 corresponding to the Web application ID 64 indicated by the URL (step S34).

The Web page handler 200 obtains the page information 64 from the URL, and specifies and calls the Web page application of the Web page function 300 corresponding to the page information 65 (step S35). In this case, the HTTP connection information is set as an argument. For example, in a case in that the Web page function 300 is developed in C language, the Web page handler 200 converts into a process type in C language and calls a function.

The Web application called by the function call from the Web page function 300 requests the non-volatile RAM 14 to obtain the setting information stored the non-volatile RAM 14 (step S36-2). When the Web page function 300 obtains the setting information from the non-volatile RAM 14 (step S36-4) , the Web page function 300 returns the Web page display information to the Web page handler 200 (step S37-2). The Web page display information includes the setting information obtained from the non-volatile RAM 14, the GIF data to configure the Web page, the relative path information 60b for the page transition, and the like.

The Web page handler 200 sends a request for obtaining the common path information 60a with respect to the network communication service library 102 (step S37-4). The network communication service library 102 requests the common path information 60a set in the connection information to the non-volatile RAM 14 (step S37-5). When the network communication service library 102 obtains the common path information 60a from the non-volatile RAM 14 (step S37-6), the network communication service library 102 sends the common path information 60a to the Web page handler 200 (step S37-7).

The Web page handler 200 configures Web page display data by using the Web page display information provided from the Web page function 300 and referring to the common path information obtained from the network communication service library 102, and sends the Web page display information serializing request to the SOAP library 201 (step S38).

For example, the SOAP library 201 creates a DOM (Document Object Model) based on process result data shown by a structure of C language, adds necessary elements and attributes (step S39), and describes Web page display data in XML by the XML library 203 (step S40). The Web page display data described in XML is sent to the Web page handler 200 as a response DOM by the SOAP library 201 (step S41).

The Web page handler 200 sends the response DOM to the Web application distribution common library 120 (step S42).

The Web application distribution common library 120 indicates the login XSL 206 corresponding to the URL indicated by the Web page request in order to convert into an absolute path in the Web page display data described in XML, and sends an XSL converting request to the XSLT processor 205 (step S43). In this case, the response DOM and a style sheet "login.xsl" are set as arguments.

When the XSLT processor 205 receives the XSL converting request, the XSLT processor 205 parses a syntax of the response DOM describing the Web page display data in XML (parse XML), creates a DOM, and adds elements and attributes by executing the login XSL 206 indicated by the argument and an absolute conversion XSL (mkAbsPath.xsl) 207 (step S44). The XSLT processor 205 converts into an HTML description by using the XML library 203 (step S45). The XSLT processor 205 sends the HTML description as an XSL conversion result to the Web application distribution common library 120 (step S46).

The Web application distribution common library 120 sends the XSL conversion result received from the Web page handler 200 as a response HTML to the sequence control library 110 (step S47). Moreover, the sequence control library 110 sends the response HTML to the HTTP daemon 2 (step S48).

The HTTP daemon 2 sends the response HTML in accordance with the HTTP, as a response to the Web page request of the client PC 40 in step S31 (step S49). The process sequence is terminated.

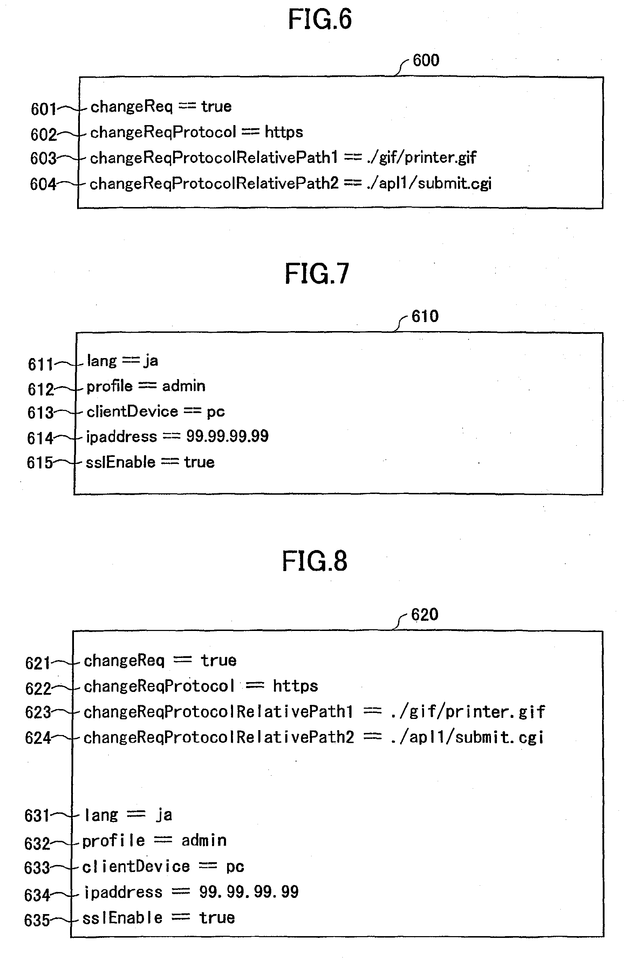

In step S37-2 in FIG. 4, the Web page display information provided from the Web page function 300 to the Web page handler 200 will be described with reference to FIG. 6. FIG. 6 is a diagram showing an example of the Web page display information provided from the Web page function according to the embodiment of the present invention.

In FIG. 6, the Web page display information 600 shows that a conversion from the relative path to the absolute path is indicated at the setting information by a description 601 showing "changeReq==true", the SSL (Secure Socket Layer) communication is indicated by a description 602 showing "changeReqProtocol==https", the relative path information 60b of the GIF data is indicated by a description 603 showing "changeReqProtocolRelativePath1==./gif/printer.gif", and the relative path information 60b of the URL referred by a description 604 showing "changeReqProtocolRelativePath2==./apl1/submit.cgi".

Next, the common path information provided from the network common service library 102 to the Web page handler 200 in step S37-7 in FIG. 4 will be described with reference to FIG. 7. FIG. 7 is a diagram showing the common path information provided from the network communication service library according to the embodiment of the present invention.

In FIG. 7, the common path information 610 is information corresponding to the common path information 60a in FIG. 3 and shows that "Japanese" is indicated as the language by a description 611 showing "lang==ja", "administrator" is indicated as the profile by a description 612 showing "profile==admin", "pc" is indicated as the device type by a description 613 showing "clientDevice==pc", "99.99.99.99" is indicated as the IP address by a description 614 showing "ipaddress==99.99.99.99", and the SSL protocol is supported by a description 615 showing "sslEnable==true".

Next, the SOAP library page display data provided from the Web page handler 200 to the SOAP library 201 in step S38 in FIG. 5 will be described with reference to FIG. 8. FIG. 8 is a diagram showing an example of the Web page display data provided to the SOAP library according to the embodiment of the present invention.

In the Web page display data 620 shown in FIG. 8, descriptions 621 through 624 show the descriptions 601 through 604 in the Web page display information 300 provided from the Web page function 300 in FIG. 6, and descriptions 631 through 635 show the descriptions 611 through 615 provided from the network communication service library 102 in FIG. 7. That is, the descriptions 601, 602, 603, and 604 in FIG. 6 are shown as the descriptions 621, 622, 623, and 624, respectively, and the descriptions 611, 612, 613, 614, and 615 in FIG. 7 are shown as the descriptions 631, 632, 633, 634, and 635, respectively.

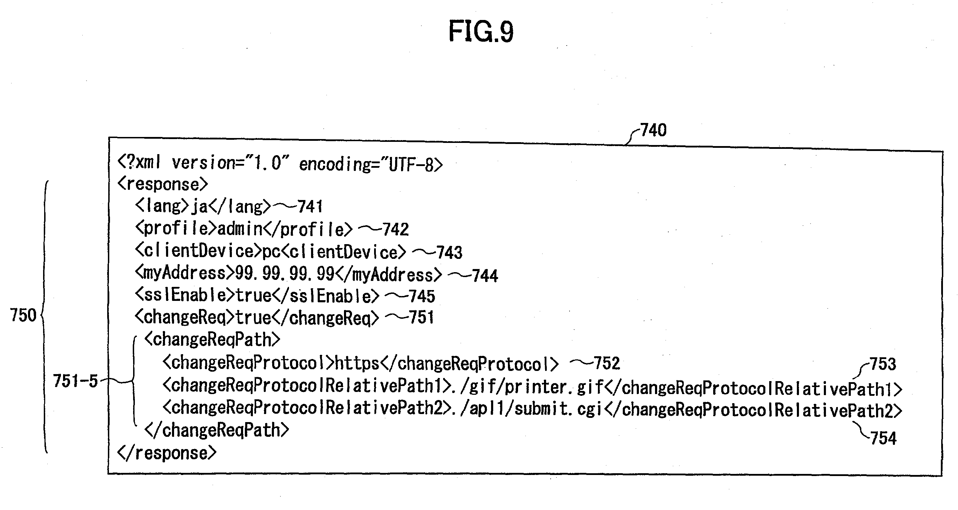

Next, the response DOM described in XML and provided from the SOAP library 201 to the Web page handler 200 will be described with reference to FIG. 9. FIG. 9 is a diagram showing an example of the response DOM described in XML and provided from the SOAP library according to the embodiment of the present invention.

In the response DOM 740 shown in FIG. 9, the description 750 showing from <response> to </response> shows that this response DOM is a response to the Web page request.

A description 741 showing <lang>ja</lang> shows a description writing the description 631 in FIG. 8 in XML and a description 742 showing <profile>admin</profile> shows a description writing the description 632 in FIG. 8 in XML, a description 743 showing <clientDevice>pc</clientDevice>shows a description writing the description 633 in FIG. 8 in XML, a description 744 showing <myAddress>99.99.99.99</myAddress> shows the description 634 in FIG. 8 in XML, and a description 745 showing <sslEnable>true</sslEnable> shows a description writing the description 635 in FIG. 8 in XML.

Moreover, a description 751 showing <changeReq>true</changeReq> shows a description writing the description 621 in FIG. 8 in XML, and a description 751-5 showing from <changeReqPath> to </changeReqPath> shows a description writing the protocol and at least one relative path to be changed to the absolute path in XML.

In the description 751-5, a description 752 showing <changeReqProtocol>https</changeReqProtocol> is a description writing the description 622 in FIG. 8 in XML, a description 753 showing <changeReqProtocolRelativePah1>./gif/printer.gif</change ReqProtocolRelativePath1> shows a description writing the description 623 in FIG. 8 in XML, a description 754 showing <changeReqProtocolRelativePath2>.apl1/submit.cgi</change ReqProtocolRelativePath2> shows a description writing the description 624 in FIG. 8 in XML.

As described above, even if the Web page to display is sent in accordance with the HTTP, when a user indicates the SSL protocol, instead of changing the protocol of the Web page to display (for example, from the HTTP protocol to the SSL protocol) , it is possible to change a URL of the GIF data specified by the user and a URL referred by the user, and a URL for a link into the absolute path, respectively.

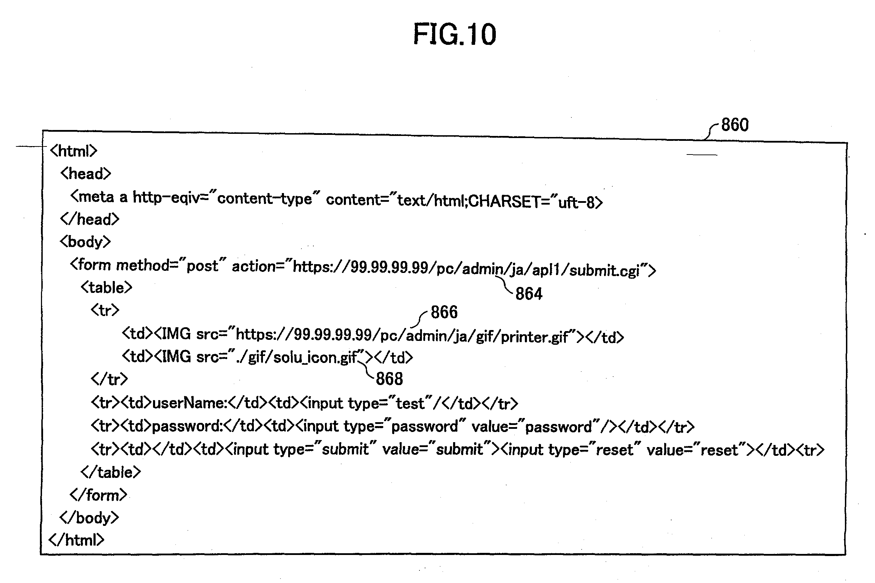

The response HTML in a case of changing into the absolute path will be described. FIG. 10 is a diagram showing an example of the response HTML in the case of changing into the absolute path according to the embodiment of the present invention.

In a response HTML 860 in FIG. 10, a description 864 showing <form method="post" action="https://99.99.99.99/pc/admin/ja/apl1/submit.cgi"> is a description writing an absolute path formed based on the descriptions 741 through 744 and the descriptions 752 and 753 in FIG. 9 in HTML. A description 866 showing <IMG src="https://99.99.99.99/pc/admin/ja/gif/printer.gif"> is a description writing an absolute path formed based on the descriptions 741 through 744 and the descriptions 752 and 754 in HTML. On the other hand, a description 868 showing <IMG src="./gif/solu_icon.gif"> is a description writing a relative path, which is not indicated by the description 751-5 in FIG. 9, in HTML.

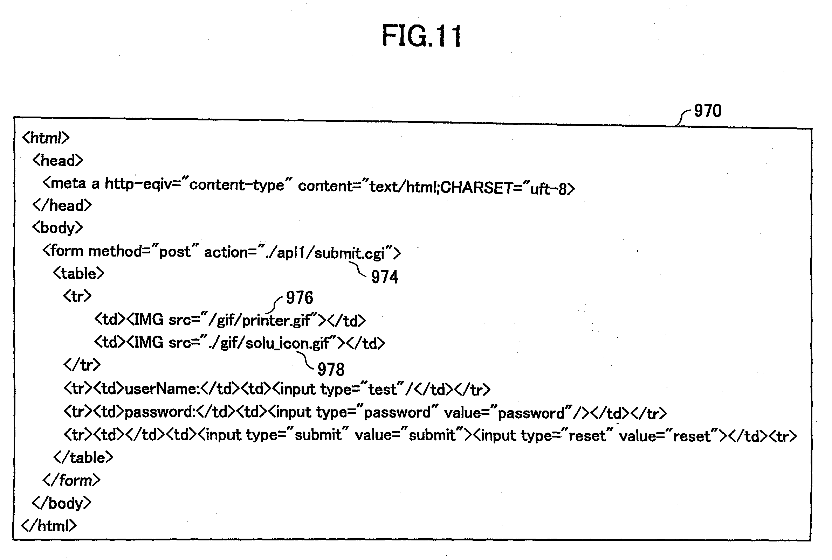

On the other hand, the response HTML in a case in that the absolute path is not indicated will be described with reference to FIG. 11. FIG. 11 is a diagram showing an example of the response HTML in the case in that the absolute path is not indicated, according to the embodiment of the present invention.

In a response HTML 970 shown in FIG. 11, a description 974 showing <form method="Post" action="./apl1/submit.cgi"> and a description 976 showing <IMG src="./gif/printer.gif"> are descriptions writing relative paths in HTML. Similarly, a description 978 showing <IMG src="./gif/solu_icon.gif"> is a description writing a relative path in HTML.

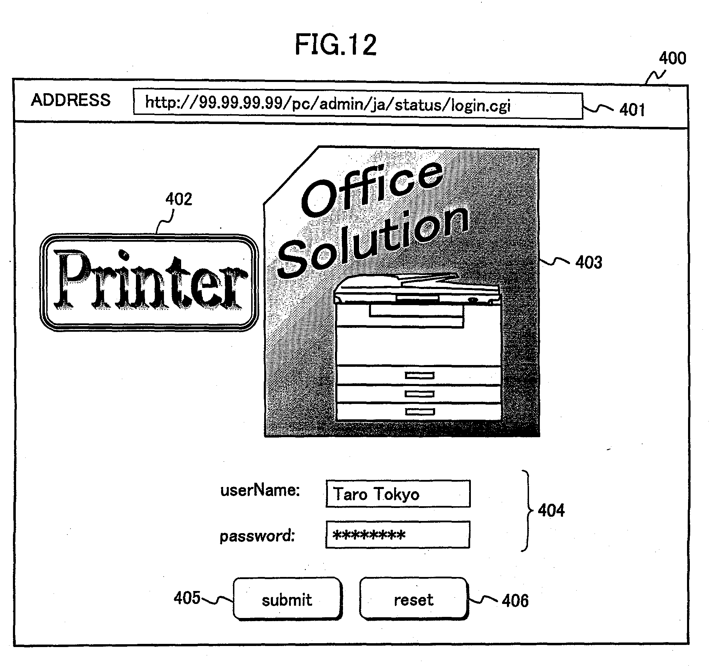

FIG. 12 is a diagram showing an example of a screen displayed at the client PC according to the embodiment of the present invention. In the screen 400 shown in FIG. 12, a URL for a current screen displayed at the client PC 40 is "http://99.99.99.99/pc/admin/ja/status/login.cgi" by an address 401 showing a current URL. The screen 400 includes an image 402 showing letters of "Printer", an image 403 showing a printer image, an input area 404 for input authentication information such as a user name, a password, and a like to authenticate a user, a button 405 showing "submit" for executing an authentication, and a button 406 showing "reset" for canceling the authentication information input by the user.

For the screen 400 itself displayed at the client PC 40, there is no difference between the response HTML shown in FIG. 10 and the response HTML shown in FIG. 11.

However, irregardless of the address 401 showing the HTTP in FIG. 10 and FIG. 11, in a case in that the screen is displayed in accordance with the response HTML shown in FIG. 10, the image 402 is displayed by the description 866 in FIG. 10 in accordance with an HTTPS (Hypertext Transfer Protocol Security) indicating the SSL communication so that data of the image 402 cannot be leaked and tampered. Moreover, by the description 864 in FIG. 10, when the user clicks the button 405 showing "submit", the authentication information input to the input area 404 can be sent by the SSL communication without leaking or tampering the authentication information. Because the descriptions 866 and 864 in FIG. 10 indicate a URL by the absolute path showing the HTTPS indicating the SSL communication.

On the other hand, the description 868 in FIG. 10, since the relative path is described, an URL is relatively indicated with respect to the address of the screen 400. Accordingly, the image 403 is displayed in accordance with the HTTP that does not guarantee any security.

In a case in that the screen 400 in FIG. 12 is displayed by the response HTML shown in FIG. 11, since the descriptions 974, 976, and 978 in FIG. 11 indicate URLs by relative paths, the image 402 and 403 are received and the authentication information is sent when the button 405 showing "submit" is sent in accordance with the HTTP of the address 401 for displaying the screen 400 without guaranteeing any security.

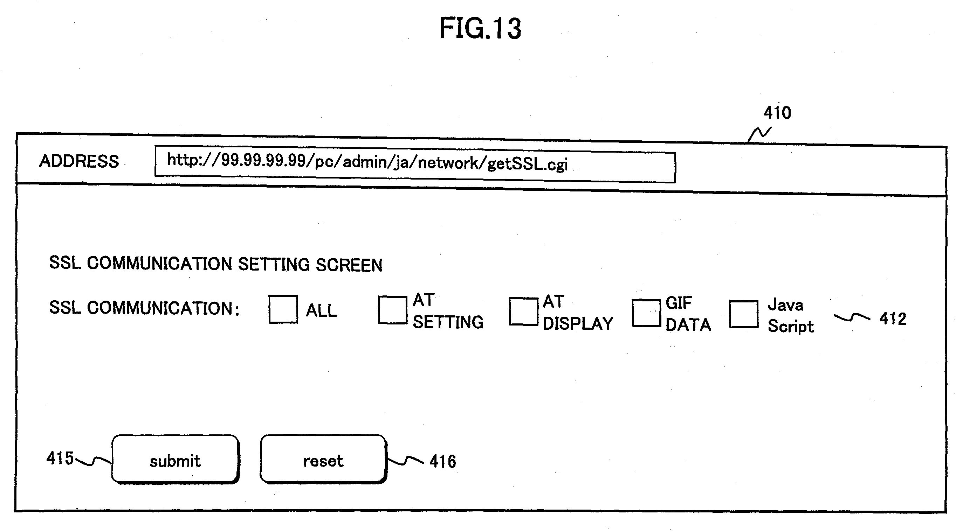

As described above, it is possible to partially set the SSL communication in the Web page so as to maintain security of information being sent to the user. A screen for indicating a portion to change into the SSL communication will be described with reference to FIG. 13.

FIG. 13 is a diagram showing an example of a screen for setting the SSL communication according to the embodiment of the present invention. In FIG. 13, a screen 410 is a screen displayed at the client PC 40 connected through the Internet 16, and includes a setting area 412 for setting items, which the user desires the SSL communication for, a button 415 showing "submit" for validating settings set to the setting area 412 by the user, and a button 416 showing "reset" for invalidating the setting set to the setting area 412 by the user.

The setting area 412 includes setting items such as "ALL" for indicating the SSL communication to all information provided from the information processing apparatus 100, "AT SETTING" for indicating the SSL communication when information is set by the user, "AT DISPLAY" for indicating the SSL communication when information is displayed at the client PC 40, "GIF DATA" for indicating the SSL communication to GIF data, "Java™ Script" for indicating the SSL communication to Java™ Script, and a like.

By the screen 410 allowing the user to set information, the user can indicate a condition of the SSL communication beforehand. The information set by the user is stored in the non-volatile RAM 14 and utilized as setting information.

The screen 410 may be displayed at the operation panel 36 so that the user may set the setting information at the information processing apparatus 100.

The information processing apparatus 100 changes the URL in the response HTML into the absolute path based on the setting information when the information processing apparatus 100 sends the Web page. Alternatively, the information processing apparatus 100 does not determine to change into the absolute path only based on the setting information set by the user and the information processing apparatus 100 itself may determine portions to set the SSL communication and to change into the absolute paths.

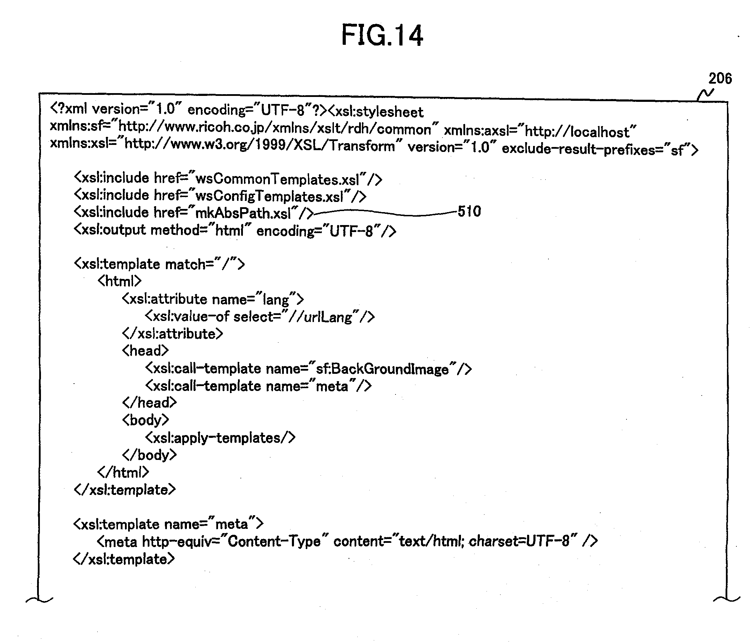

The login XSL 206, which the XSLT processor 205 reads when the information processing apparatus 100 changes into the absolute path, will be described with reference to FIG. 14, FIG. 15, and FIG. 16. FIG. 14, FIG. 15, and FIG. 16 are diagrams showing an example of the login XSL according to the embodiment of the present invention. A single data file of the login XSL is shown by FIG. 14, FIG. 15, and FIG. 16.

In the login XSL 206 shown in FIG. 14, a description 510 showing <xsl: include href="mkAbsPath.xsl"/> shows that the absolute path conversion XSL 207 is referred if necessary in the following descriptions.

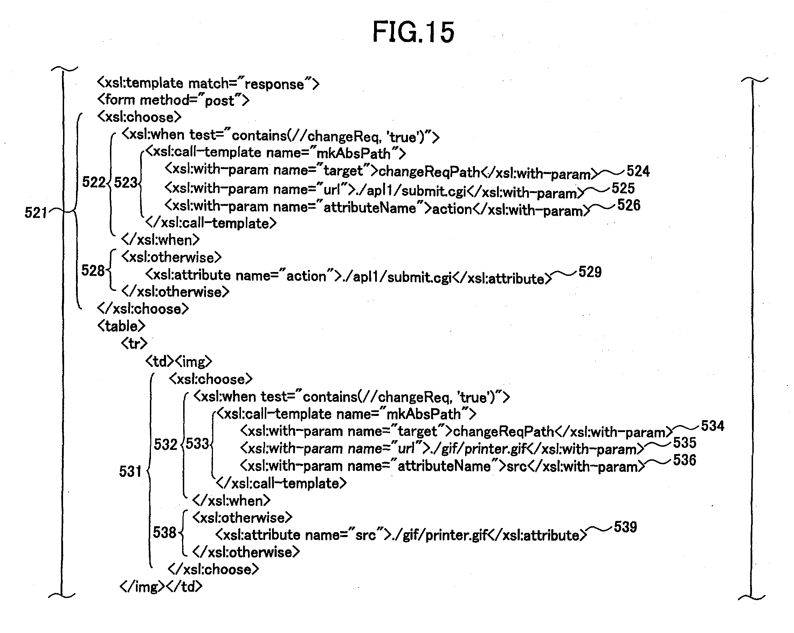

In FIG. 15, a description 521 showing from <xsl:choose> to </xsl:choose> is a description written in XSL and concerning the description 864 in FIG. 10 and the description 974 in FIG. 11.

A description 522 showing from <xsl:when test="contains(//changeReq,'true')"> to </xsl:when> is a description written in XSL and concerning the description 751, which is written in XML in FIG. 9 and indicates "true" for <changeReq>.

A description 523 showing from <xsl:call-template name="mkAbsPath"> to </xsl:call-template> is a description written in XSL for describing a URL to be the absolute path in HTML by using the absolute path conversion XSL 207.

In a description 523, a description 524 showing <xsl:with-param name="target">changeReqPath</xsl:with-param> refers to the description 751-5 written in XML in FIG. 9. If "./apll/submit.cgi" of a description 525 showing <xsl:with-param name="url">./apl1/submit.cgi</xsl:with-param> is indicated in the description 751-5 written in XML, as an attribute name "action" indicated in a description 526 showing <xsl:with-param name="attributeName">action</xsl:with-param>, the description 524 indicates to write the absolute path in HTML by using the absolute path conversion XSL 207.

On the other hand, a description 528 showing from <xsl:otherwise> to </xsl:otherwise> is written in XSL and indicates a description (relative path) written in HTML if <changeReq> does not indicate "true" in the description 751 written in XML in FIG. 9.

In the description 528, a description 529 showing <xsl:attribute name="action">./apl1/submit.cgi</xsl:attribute> indicates that as the attribute name "action", "./apl1/submit.cgi" (relative path) is indicated to be written in HTML.

A description 531 showing from <xsl:choose> to </xsl:choose> is a description written in XSL and concerning the description 865 in FIG. 10 and the description 976 in FIG. 11.

A description 532 showing from <xsl:when test="contains(//changeReq,'true')"> to </xsl:when> is a description written in XSL and indicates to write a description (absolute path) in HTML if <changeReq> indicates "true" in the description 751 written in XML in FIG. 9.

A description 533 showing <xsl:call-template name="mkAbsPath"> to </xsl:call-template> is a description written in XSL to describe the URL in HTML to form the absolute path by using the absolute path conversion XSL 207.

In the description 533, a description 534 showing <xsl:with-param name="target">changeReqPath</xsl:with-param> refers to the description 751-5 written in XML in FIG. 9. If "./gif/printer.gif" of a description 535 showing <xsl:with-param name="url">./gif/printer.gif</xsl:with-param> is indicated in the description 751-5 written in XML, as an attribute name "src" indicated in a description 536 showing <xsl:with-param name="attributeName">src</xsl:with-param>, the description 536 indicates to write the absolute path in HTML by using the absolute path conversion XSL 207.

On the other hand, a description 538 showing from <xsl: otherwise> to </xsl: otherwise> is a description written in XSL and indicates to a describe (relative path) in HTML when <changeReq> does not indicate "true" in the description 351 written in XML in FIG. 9.

In the description 538, a description 539 showing <xsl:attribute name="src">./gif/printer.gif</xsl:attribute> indicates that as an attribute name "src", "./gif/printer.gif" (relative path) is described in HTML.

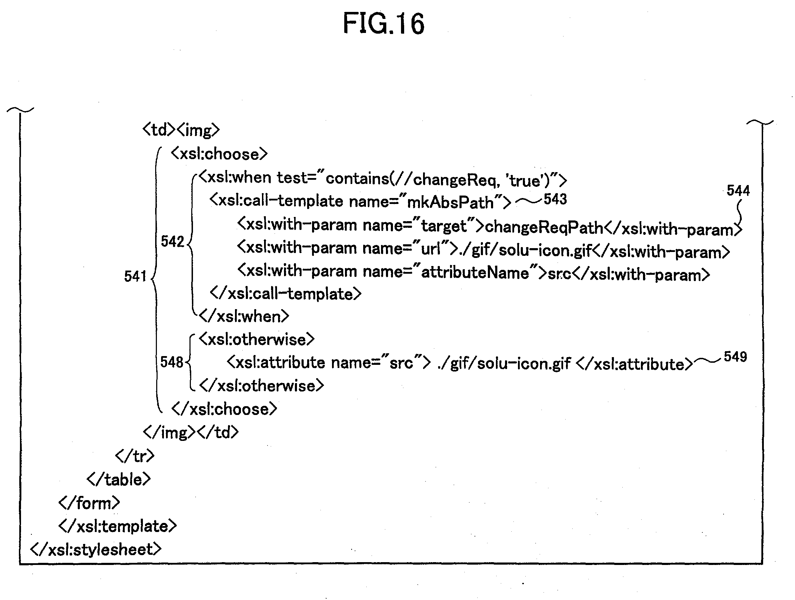

In FIG. 16, a description 541 showing from <xsl:choose> to </xsl:choose> is a description written in XSL and concerning the description 868 in FIG. 10 and the description 978 in FIG. 11.

A description 542 showing from <xsl:when test="contains(//changeReq,'true')"> to </xsl:when> is a description written in XSL and indicates to write a description (absolute path) in HTML if <changeReq> indicates "true" in the description 751 written in XML in FIG. 9.

A description 543 showing from <xsl:call-template name="mkAbsPath"> to </xsl:call-template> is a description written in XSL to describe a URL shown by the absolute path in HTML by utilizing the absolute path conversion XSL 207.

In the description 543, a description 544 showing <xsl:with-param name="target">changeReqPath</xsl:with-param> refers to the description 751-5 written in XML in FIG. 9. If "./gif/solu_icon.gif" of the description 525 showing <xsl:with-param name="url">./gif/solu_icon.gif</xsl:with-param> is indicated in the description 751-5 written in XML, as an attribute "src" indicated in a description 526 showing <xsl:with-param name="attributeName">src</xsl:with-param>, the description 525 indicates to describe the absolute path in HTML by utilizing the absolute path conversion XSL 207.

On the other hand, a description 548 showing from <xsl: otherwise> to </xsl: otherwise> is a description written in XSL and indicates to write a description (relative path) in HTML if <changeReq> does not indicate "true" in the description 751 written in XML in FIG. 9.

In the description 548, a description 539 showing <xsl:attribute name="src">./gif/solu_icon.gif</xsl:attribute> indicates to describe "./gif/solu_icon.gif" (relative path) in HTML as the attribute "src".

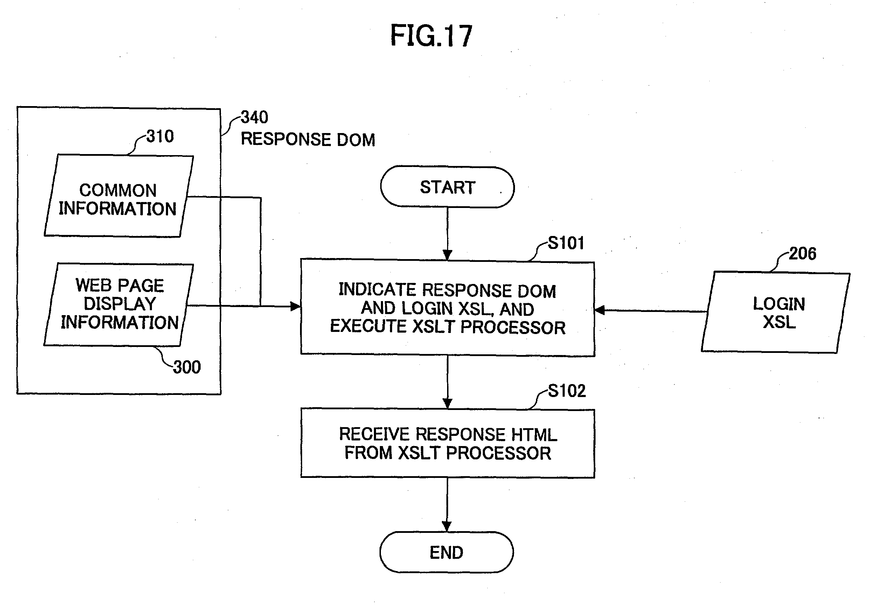

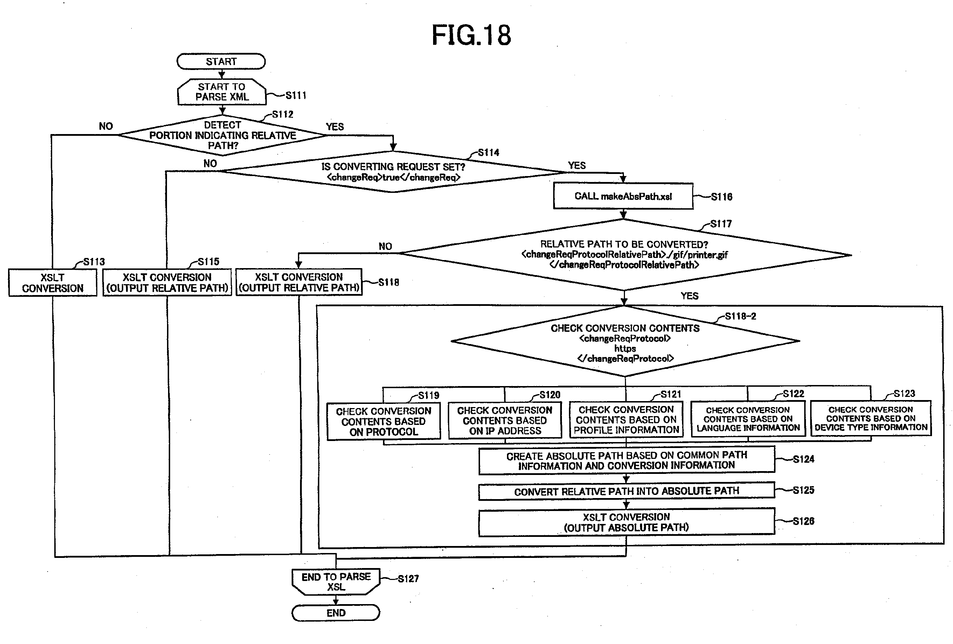

An absolute path converting process, which is conducted by the Web application distribution common library 120 to realize a process as described above, will be described with reference to FIG. 17 and FIG. 18.

FIG. 17 is a flowchart for explaining the absolute path converting process conducted by the Web application distribution common library according to the embodiment of the present invention. In FIG. 17, the Web application distribution common library 120 indicates the response DOM received from the Web page handler 200 and the login XSL 206 corresponding to the Web page to provide to the user, and executes the XSLT processor 205 (step S101). For example, the response DOM 340 is the response DOM 740 as shown in FIG. 9, and includes the Web page display information 300 shown in FIG. 6 and the common path information 310 shown in FIG. 7.

Then, the Web application distribution common library 120 receives the response HTML, in which the URL is converted into the absolute path if necessary, from the XSLT processor 205 (step S102).

Next, the absolute path converting process executed by the XSLT processor 205 will be described with reference to FIG. 18. FIG. 18 is a flowchart for explaining the absolute path converting process executed by the XSLT processor according to the present invention.

In FIG. 18, the XSLT processor 205 begins to parse the login XSL 206 indicated by the Web application distribution common library 120 (step S111).

The XSLT processor 205 determines whether or not a portion indicated to convert the relative path into the absolute path is detected, by parsing the response DOM 340 written in XML and indicated from the Web application distribution common library 120 (step S112). If there is no portion indicated to convert the relative path into the absolute path (for example, a case in that there is no URL to refer within the Web page) , the XSLT processor 205 conducts an XSL conversion (step S113), terminates parsing the response DOM written in XSL (step S127), and ends the absolute bus converting process conducted by the XSLT processor 205. Then, the response HTML is provided to the Web application distribution common library 120.

On the other hand, when a determination result in step S112 shows that there is the portion indicated to convert the relative path into the absolute path, the XSLT processor 205 determines whether or not a converting request is received (step S114). For example, the XSLT processor 205 determines whether or not there is a description showing <changeReq>true</changeReq> such as the description 751 of the response DOM in FIG. 9 to indicate the converting request. When there is no converting request, the XSLT processor 205 conducts an XSLT conversion to output the response HTML remaining the relative path (step S115), terminates parsing the XSL (step S127), and terminates the absolute path conversing process. In this case, the response HTML in which all URLs referred from the Web page are shown by the relative path is provided to the Web application distribution common library 120.

On the other hand, when the determination result in step S114 shows that the converting request is indicated, the XSLT processor 205 calls the absolute path conversion XSL 207 (step S116). Then, the XSLT processor 205 determines whether or not the relative path to convert is indicated (step S117). For example, it is determined whether or not the relative path subject to convert into the absolute path is indicated such as the description 753 showing <changeReqProtocolRelativePathl>.gif/printer.gif</change ReqProtocolRelativePath1>. When it is determined that there is no relative path subj ect to convert into the absolute path, the XSLT conversion is conducted so as to output the response HTML remaining the relative path (step S118). The XSLT processor 205 terminates parsing the XSL (step S127) , and terminates the absolute path converting process. In this case, the response HTML in which all URLs referred from the Web page are shown by the relative path is provided to the Web application distribution common library 120.

On the other hand, when the determination result in step S117 shows that the relative path to convert is indicated, the XSLT processor 205 further confirms conversion contents (step S118-2). For example, the XSLT processor 205 confirms the communication protocol by referring to the common path information 60a based on the description 752 showing <changeReqProtocol>https</changeReqProtocol> in the response DOM 740. That is, the XSLT processor 205 determines whether or not the communication protocol can be changed into an indicated communication protocol (whether or not the indicated communication protocol is available) (step S119), determines whether or not the communication protocol can be changed into the indicated communication protocol based on the IP address 62 (step S120), determines whether or not the communication protocol can be changed into the indicated communication protocol based on the profile information 63b (step S121), determines whether or not the communication protocol can be changed into the indicated communication protocol based on the language information 63c (step S122), and further determines whether or not the communication protocol can be changed into the indicated communication protocol based on the device type information 63a (step S123).

Accordingly, the XSLT processor 205 creates the absolute path based on the common path information 60a and the conversion information (step S124). The XSLT processor 205 converts a portion describing the relative path into the absolute path (step S125). The XSLT processor 205 conducts the XSLT conversion so as to output the response HTML in which the relative path is converted into the absolute path (step S126) , terminates parsing the XSL (step S127) , and terminates the absolute path converting process. The response HTML, in which at least one of URLs to refer from the Web page is converted into the absolute path is provided to the Web application distribution common library 120.

In the embodiment of the present invention, for example, when the user indicates the SSL communication, it is possible to change the entire or a part of URLs, such as the GIF data specified within the Web page, a URL referred within,the Web page, the relative path information 60b of a URL, into the URL described by the absolute path.

Moreover, when the relative path is converted into the absolute path, the XSLT processor 205 refers to the common path information 60a of the URL, and controls to convert into the absolute path so as to correspond to the usage pattern attribute information 63. Thus, for example, when a communication speed of the client PC 40 is slower, it can be controlled not to conduct the SSL communication with respect to a portion of an image on purpose.

Accordingly, based on the setting information of the SSL communication by the user and the communication path being always succeeded by the page transition of the Web page, it is possible to dynamically describe the URL of information referred from the Web page by the relative path or the absolute path. In particular, for a description of the URL shown by the absolute path, it is possible to indicate a different protocol from a communication protocol of the Web page currently being displayed. Therefore, it is possible to partially secure the Web page.

The present invention is not limited to the specifically disclosed embodiments, and variations and modifications may be made without departing from the scope of the present invention.

## Claims

1. An information processing apparatus,
**characterized by**:
a plurality of Web page display information generating parts (300) generating Web page display information to display in a Web page in response to a Web page request, wherein the Web page includes a plurality of information components (402-406, 412); and
a Web page generating part (120) generating the Web page by switching an address of at least one of the plurality of the information components (402-406, 412) into an absolute path or an relative path.

2. The information processing apparatus as claimed in claim 1, further **characterized by**:
a path switch information obtaining part (410) obtaining path switch information indicating to switch the address to the absolute path or the relative path; and
a Web page handler part (200) sending the common path information of the absolute path, which is formed by common path information to be succeeded without any change by a Web page transition and relative path information including identification information specifying each of the information components (402-406, 412), to the Web page generating part (120),
wherein the Web page generating part (120) generates the Web page based on the common path information when the path switch information indicates the absolute path so as to show the address of at least one of the information components (402-406, 412) by the absolute path.

3. The information processing apparatus as claimed in claim 1, **characterized in that** each of the Web page display information generating parts (300) is **characterized by**:
an obtaining part obtaining the path switch information from the path switch information obtaining part (410); and
a sending part sending the path switch information to the Web page handler part (200) , and sending the identification information of the information component (402-406, 412) to be indicated by the absolute path in the plurality of the information components (402-406, 412) when the path switch information indicates the absolute path,
wherein said Web page handler part (200) sends the common path information, and the path switch information and the identification information which are received from each of the Web page display information generating parts (300), and
the Web page generating part (120) generates the Web page so as to show the address of the information component (402-406, 412) specified by the identification information, by the absolute path.

4. The information processing apparatus as claimed in claim 3, **characterized in that** the Web page generating part (120) generates the Web page so that the address of the information components (402-406, 412) is shown by the absolute path indicating a second protocol different from a first protocol, which is used to provide the Web page.

5. The information processing apparatus as claimed in claim 4, **characterized in that** the Web page display information generating part (300) indicates the first protocol and the second protocol.

6. The information processing apparatus as claimed in claim 4, **characterized in that** the Web page generating part (120) generates the Web page by utilizing a page creation style sheet for each Web page and a path conversion style sheet for converting the address of the information component (402-406, 412) into the absolute path, so that the address of the information component (402-406, 412) is shown by the absolute path.

7. The information processing apparatus as claimed in claim 2, **characterized in that** the path switch information obtaining part (410) obtains the path switch information, which is indicated by a user at a client terminal used by the user, through a network.

8. The information processing apparatus as claimed in claim 2, further **characterized by** an operation panel which can be operated by a user,
wherein the path switch information obtaining part (410) obtains the path switch information which is indicated by the user at the operation panel.

9. The information processing apparatus as claimed in claim 3, **characterized in that** the Web page handler part (200) describes the common path information, the path switch information and the identification information received from the each of the Web page display information generating parts (300) in extensible markup language to create XML data, and sends the XML data to the Web page generating part (120).

10. The information processing apparatus as claimed in claim 2, **characterized in that** the identification information is a data file name.

11. The information processing apparatus as claimed in claim 2, the identification information is web identification information identifying each of the plurality of the Web page display information generating parts (300).

12. The information processing apparatus as claimed in claim 11, **characterized in that** the information component (402-406, 412) is an address of another Web page to link from the Web page.

13. The information processing apparatus as claimed in claim 2, **characterized in that** the common path information includes at least one of language information, device type information, and profile information.

14. The information processing apparatus as claimed in claim 2, **characterized in that** the common path information includes a first protocol or a second protocol, and an IP address.

15. An information processing method, which is executed by a computer, **characterized by**:
generating Web page display information to display in a Web page in response to a Web page request; and
generating the Web page by switching an address of at least one of a plurality of information components (402-406, 412) into an absolute path or an relative path.
